# EUROPÄISCHE PATENTSCHRIFT

(11) **EP 2 665 950 B1**
(45) Veröffentlichungstag und Bekanntmachung des Hinweises auf die Patenterteilung: **12.11.2014**
(21) Anmeldenummer: 12703986.5
(22) Anmeldetag: 23.01.2012
(51) Int. Cl.: F16J 9/06, F16J 9/20

(54) **ÖLABSTREIFRING**
OIL CONTROL RING
SEGMENT RACLEUR D'HUILE

(30) Priorität: 21.01.2011 EP 11151750
(43) Veröffentlichungstag der Anmeldung: 27.11.2013
(73) Patentinhaber: Burckhardt Compression AG, 8404 Winterthur (CH)
(72) Erfinder: FEISTEL, Norbert, CH-8548 Ellikon a.d. Thur (CH); ALLENSPACH, Andreas, CH-8406 Winterthur (CH)
(74) Vertreter: Dr. Graf & Partner AG
(86) Internationale Anmeldenummer: PCT/EP2012/050992
(87) Internationale Veröffentlichungsnummer: WO 2012/098266

(56) Entgegenhaltungen:
- WO-A1-95/23305
- WO-A1-03/044400
- DE-A1- 19 630 745
- US-A- 5 474 307

## Beschreibung

Die Erfindung betrifft einen Ölabstreifring gemäss dem Oberbegriff von Anspruch 1.

### Stand der Technik

Das gattungsgemäße Dokument EP 1446597B 1 sowie das zu derselben Patentfamilie gehörende Dokument WO03/044400A1 offenbaren einen Ölabstreifring, der insbesondere als Ölbarriere für Kolbenstangen von Schiffsdieselmotoren verwendet wird. Der Ölabstreifring weist zur Kolbenstangenseite hin gerichtete Ölabstreiflamellen aus Kunststoff auf, die das auf der Kolbenstange befindliche Öl abstreift und zum Beispiel wieder einem Kurbelgehäuse zuführt. Dieser bekannte Ölabstreifring weist den Nachteil auf, dass das Abstreifen nicht sehr effizient ist, da die Abstreifkante nicht stabil ist. Zudem tritt ein relativ grosser Verschleiss auf, sodass der Ölabstreifring relativ häufig gewartet werden muss. Es ist zudem bekannt, zum Beispiel aus dem Dokument WO 95/23305, einen metallischen Abstreifer vorzusehen, welcher auf der Kolbenstange aufliegt. Ein solcher Ölabstreifring weist den Nachteil auf, dass an der Kolbenstange und/oder am Abstreifer ein relativ grosser Verschleiss auftritt.

### Darstellung der Erfindung

Aufgabe der Erfindung ist es einen vorteilhafteren Ölabstreifring auszubilden, der über eine lange Betriebsdauer ein zuverlässiges Ölabstreifen gewährleistet. Die Aufgabe wird gelöst mit einem Ölabstreifring ausweisend die Merkmale von Anspruch 1. Die Unteransprüche 2 bis 12 betreffen weitere vorteilhafte Ausgestaltungen. Die Aufgabe wird weiter gelöst mit einer Ölabstreifpackung aufweisend die Merkmale von Anspruch 13. Die Unteransprüche 14 und 15 betreffen weitere vorteilhafte Ausgestaltungen.

Die Aufgabe wird insbesondere gelöst mit einem Ölabstreifring umfassend einen Haltering sowie umfassend einen Abstreifer mit einer Abstreiferlamelle, wobei der Abstreifer derart im Haltering angeordnet ist, dass die Abstreiferlamelle gegen das Zentrum des Ölabstreifrings hin ausgerichtet ist, um Öl an einer Kolbenstange abzustreifen, wobei der Abstreifer aus einer Mehrzahl von Abstreifersegmenten besteht welche in Umfangsrichtung des Ölabstreifrings nacheinander folgend angeordnet sind, und wobei der Haltering eine Nut zur formschlüssigen Aufnahme der Abstreifersegmente aufweist, und wobei der Haltering eine Stossstelle aufweist, und wobei der Haltering zumindest eine zum Zentrum des Ölabstreifrings hin ausgerichtete erste Stirnfläche aus Kunststoff ausbildet, und wobei der Abstreifer aus einem Material mit grösserer Härte als den die erste Stirnfläche ausbildenden Kunststoff besteht, wobei die Abstreiflamelle des Abstreifers eine zum Zentrum hin ausgerichtete Berührungsstelle aufweist, und wobei der Abstreifer und der Haltering derart gegenseitig angepasst ausgestaltet sind, dass sowohl die zumindest erste Stirnfläche als auch die Berührungsstelle an der Kolbenstange anliegen können.

Der erfindungsgemässe Ölabstreifring weist den Vorteil auf, dass dieser ein weitgehendes und effizientes Abstreifen des sich an der Kolbenstange befindlichen Öls ermöglicht, und dass der Ölabstreifring nur einen geringen Verschleiss aufweist. Der erfindungsgemässe Ölabstreifring umfasst einen Abstreifer, der eine grössere Härte aufweist als das Material des Halterings, welches die erste Stirnfläche ausbildet, die zur Anlage an der Kolbenstange bestimmt ist. Ein derartiger Abstreifer weist eine stabile und vorzugsweise auch scharfe Abstreifkante auf, was ein effizientes Abstreifen des Öls gewährleistet. Zudem umfasst der erfindungsgemässe Ölabstreifring einen Haltering, der eine aus Kunststoff gebildete erste Stirnfläche aufweist, welche zur Kolbenstange hin ausgerichtet ist und welche zur Anlage an der Kolbenstange bestimmt ist. Der erfindungsgemässe Ölabstreifring ist derart ausgestaltet, dass sowohl die erste Stirnfläche als auch Abstreifkante gleichzeitig an der Kolbenstange anliegen können, was zur Folge hat, dass die Abstreifkante mit nur sehr geringem Druck oder ohne Druck an der Kolbenstange anliegen kann, da ein Teil der insbesondere radial nach innen wirkenden Kräfte über die erste Stirnfläche übertragen wird. Die Abstreifkante erfährt dadurch einen sehr geringen Verschleiss. Zudem wird die Lage und Ausrichtung der Abstreifkante bezüglich der Kolbenstange durch die an der Kolbenstange anliegenden Stirnfläche des Halterings stabilisiert, und insbesondere auch bezüglich allfällig auftretender Bewegungen stabilisiert. In einer besonders vorteilhaften Ausgestaltung ist das die erste Stirnfläche ausbildende Material ein Kunststoff mit guten Trockenlaufeigenschaften wie gefülltes PTFE oder ein Hochtemperaturpolymer modifiziert mit für den Trockenlauf geeigneten Füllstoffen wie PTFE, MoS2, Graphit usw. Der Abstreifer besteht vorzugsweise aus einem Metall wie Grauguss, Bronze, Messing und Aluminium, oder aus einem Kunststoff, insbesondere aus einem Hochtemperaturpolymer wie PEEK, Polyimid oder PPS.

Der Abstreifer besteht aus einer Mehrzahl von Abstreifersegmenten. Der Haltering kann einstückig ausgestaltet sein, oder aus einer Mehrzahl von Halteringsegmenten gebildet sein. Der Haltering sowie der Abstreifring sind vorzugsweise derart gegenseitig angepasst ausgestaltet, dass die Lamelle des Abstreifrings zumindest teilweise am Haltering anliegt, sodass die Lamelle vor einer übermässigen Belastung geschützt ist, da eine am Abstreifring beziehungsweise an der Lamelle angreifende Kraft unmittelbar auf den Haltering übertragen wird.

Der erfindungsgemässe Ölabstreifring ist insbesondere für trocken laufenden Kompressoren besonders gut geeignet, da bei einem trocken laufenden Verdichter die Kontaminierung des zu verdichtenden Gases mit Schmieröl sicher vermieden werden muss. Darüber hinaus können bereits geringe Ölleckagen, die in ein trocken laufendes Kolbenstangen-Dichtsystem eindringen, dessen rasche Zerstörung bewirken. Besonders wichtig ist die zuverlässige Funktion des Ölabstreifsystems bei der Verdichtung von Sauerstoff. Hier kann es durch Ölleckagen gar zu einem Brand kommen. Aber auch wenn keine akute Gefahr aus der Ölleckage droht, führt dies zumindest zu erhöhten Betriebskosten sowie zu einer Umweltbelastung, da das aus dem Kurbeltrieb verlorenen Schmieröl kontinuierlich ersetzt und das Leckageöl entsorgt werden muss.

Der erfindungsgemässe Ölabstreifring wird vorzugsweise in einer Ölabstreifringpackung umfassend eine Mehrzahl von in Verlaufsrichtung einer Kolbenstange hintereinander angeordneten Ölabstreifringe verwendet.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: einen Querschnitt durch den Ölabstreifring entlang der Schnittlinie C-C;
- Fig. 2: eine Ansicht von unten auf den Ölabstreifring gemäss Figur 1;
- Fig. 3: einen Querschnitt durch ein Halteringsegment entlang der Schnittlinie D-D;
- Fig. 4: eine Draufsicht auf das Halteringsegment;
- Fig. 5: einen Querschnitt durch einen Abstreifer entlang der Schnittlinie C-C;
- Fig. 6: eine perspektivische Ansicht eines Abstreifers;
- Fig. 7: eine vertikal angeordnete Packung umfassend drei nacheinander angeordnete Ölabstreifringe;
- Fig. 8: eine Frontansicht eines der in Figur 7 dargestellten Ölabstreifringe aus Richtung B;
- Fig. 9: eine horizontal angeordnete Packung umfassend drei nacheinander angeordnete Ölabstreifringe;
- Fig. 10: eine Frontansicht eines der in Figur 9 dargestellten Ölabstreifringe aus Richtung B;
- Fig. 11: einen Querschnitt durch ein weiteres Ausführungsbeispiel eines Ölabstreifringes;
- Fig. 12: eine Draufsicht auf einen einstückigen Ölabstreifring;
- Fig. 13: einen Querschnitt durch ein weiteres Ausführungsbeispiel eines Ölabstreifrings
- Fig. 14: eine Ansicht eines weiteren Ölabstreifrings;
- Fig. 15: eine Draufsicht auf ein weiteres Halteringsegment;
- Fig. 16: eine Draufsicht auf einen weiteren, einstückigen Ölabstreiferring.

Grundsätzlich sind in den Zeichnungen gleiche Teile mit gleichen Bezugszeichen versehen.

### Wege zur Ausführung der Erfindung

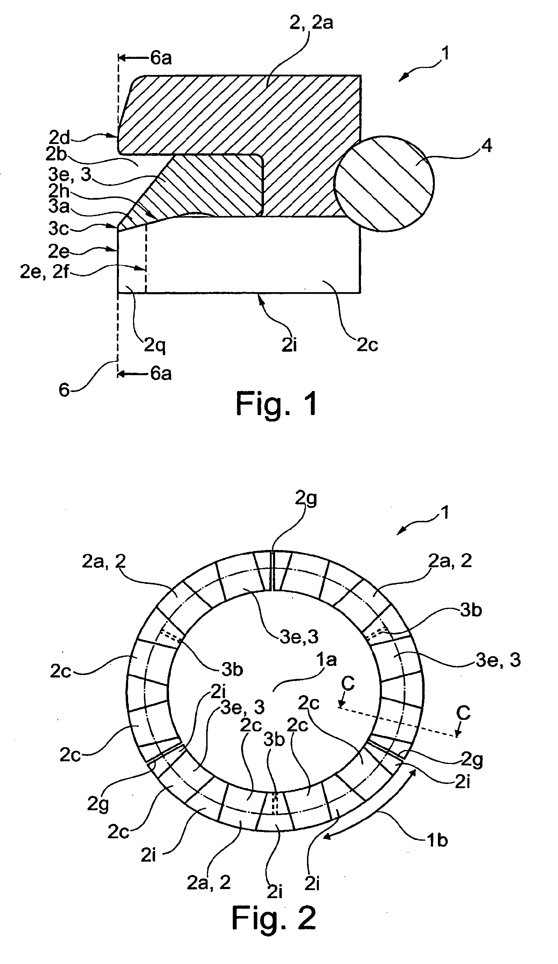

Fig. 1 zeigt einen Ölabstreifring 1 entlang der in Figur 2 dargestellten Schnittlinie C-C. Figur 2 zeigt denselben Ölabstreifringe 1 in einer Ansicht von unten. Wie aus Figur 2 ersichtlich umfasst der Ölabstreifring 1 einen Haltering 2 bestehend aus drei in Umfangsrichtung 1b nacheinander folgend angeordneten Halteringsegmenten 2a, wobei sich zwischen den Halteringsegmenten 2a jeweils eine radial verlaufende Stossstelle 2g befindet. Der Haltering 2 könnte auch nur aus zwei Halteringsegmenten 2a oder auch aus mehr als drei Halteringsegmenten 2a bestehen. Der Haltering 2 weist in Umfangsrichtung 1b beabstandet angeordnete Kronenteile 2i auf, zwischen welchen jeweils ein in radialer Richtung zum Zentrum 1a des Ölabsteifrings 1 hin verlaufender Kanal 2c angeordnet ist. Im Haltering 2 ist ein Abstreifer 3 angeordnet, welcher im dargestellten Ausführungsbeispiel aus drei in Umfangsrichtung nacheinander angeordneten Abstreifringsegmenten 3e besteht, wobei sich zwischen den Abstreifringsegmenten 3e jeweils eine radial verlaufende Stossstelle 3b befindet. Der Abstreifer 3 könnte auch nur aus zwei Abstreifsegmenten 3e oder auch aus mehr als drei Abstreifsegmenten 3e bestehen. Im montierten Zustand umfasst der Haltering 2 zudem, wie nur in Figur 1 dargestellt, ein Spannelement 4 wie eine Feder, welche den Haltering 2 von Aussen umschliesst, und eine gegen das Zentrum 1a hin wirkende Vorspannkraft auf den Haltering 2 beziehungsweise den Abstreifer 3 bewirkt.

Figur 1 zeigt den Haltering 2 beziehungsweise ein Halteringsegment 2a, das eine umlaufende Nut 2b aufweist, in welcher der Abstreifer 3 beziehungsweise das Abstreifringsegment 3e angeordnet ist. Der Abstreifer 3 weist eine Abstreiferlamelle 3a auf, welche an deren Spitze eine Berührungsstelle 3c aufweist. Der Abstreifer 3 besteht vorzugsweise aus einem Metall wie Grauguss, Bronze, Messing und Aluminium oder einem Hochtemperaturpolymer wie PEEK, Polyimid oder PPS. Der Abstreifer 3 besteht aus einem Material mit grösserer Härte als der die erste Stirnfläche 2d,2e ausbildende Kunststoff des Halterings 2. Der Abstreifer 3 ist derart im Haltering 2 angeordnet, dass die Abstreiferlamelle 3a sowie die Berührungsstelle 3c gegen das Zentrum 1a des Ölabstreifrings 1 hin ausgerichtet ist, um Öl von einer nur andeutungsweise dargestellten Oberfläche 6a einer Kolbenstange 6 abzustreifen. Die Nut 2b des Halterings 2 ist vorteilhafter derart bezüglich dem Abstreifersegment 3a angepasst ausgestaltet, dass die Nut 2b eine formschlüssige Aufnahme des Abstreifersegmentes 3a erlaubt. Der Haltering 2 weist zumindest eine zum Zentrum 1a des Ölabstreifrings 1 hin ausgerichtete Stirnfläche 2d, 2e aus Kunststoff auf. Der Abstreifer 3 und der Haltering 2 sind derart gegenseitig angepasst ausgestaltet, dass sowohl die zumindest erste Stirnfläche 2d als auch die Berührungsstelle 3c gleichzeitig an der Kolbenstange 6 anliegen können. In einer vorteilhaften Ausgestaltung weist der Haltering 2 eine erste und eine zweite Stirnfläche 2d,2e auf, welche beide gleich weit in Richtung zum Zentrum 1a des Ölabstreifrings 1 hin vorstehen, sodass beide Stirnflächen 2d,2e an der Oberfläche 6a der Kolbenstange 6 anliegen können. In einer besonders vorteilhaften Ausgestaltung ist das die erste Stirnfläche 2d ausbildende Material ein Material mit guten Trockenlaufeigenschaften wie gefülltes PTFE oder ein Hochtemperaturpolymer modifiziert mit für den Trockenlauf geeigneten Füllstoffen wie PTFE, MoS2, Graphit usw. Die erste und zweite Stirnfläche 2d,2e sind über eine in Umfangsrichtung 1b verlaufende Nut 2b gegenseitig getrennt. Figur 1 zeigt zudem einen in radialer Richtung verlaufenden Kanal 2c, welcher seitlich durch das Kronenteil 2i begrenzt ist.

In einer weiteren Ausführungsform könnte die zweite Stirnfläche 2e, wie in Figur 1 strichliert dargestellt und auch mit 2f bezeichnet, zurückversetzt angeordnet sein, sodass sich zwischen dieser zweiten Stirnfläche 2e und der Oberfläche 6a ein Zwischenraum 2q ausbildet.

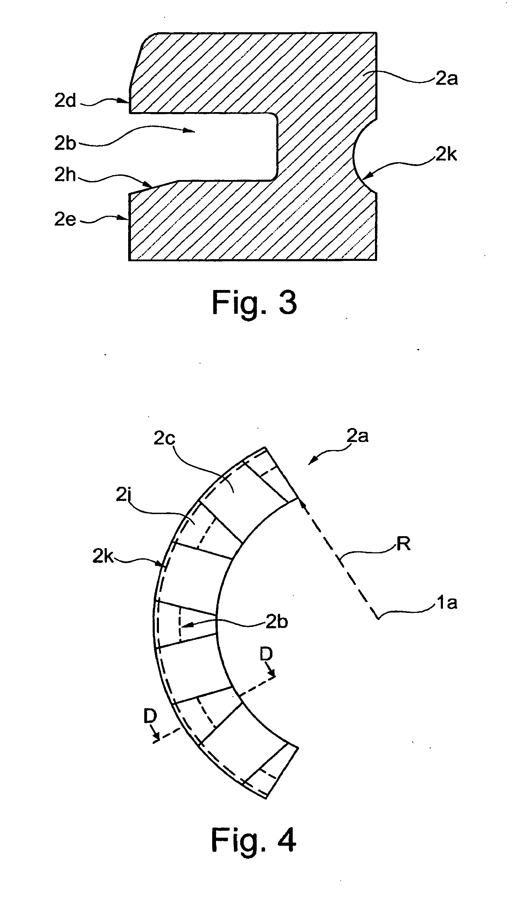

Figur 3 zeigt das Halteringsegment 2a mit dessen Nut 2b sowie der ersten und zweiten Stirnfläche 2d,2e nochmals im Detail. Das Halteringsegment 2a weist zudem eine Vertiefung 2k zur Aufnahme des Spannelementes 4 auf. Die Nut 2b weist im dargestellte Ausführungsbeispiel zum Zentrum 1a hin eine Erweiterung auf, indem die Nut 2b eine quer beziehungsweise schräg zur Oberfläche 6a der Kolbenstange 6 verlaufende Abstützfläche 2h aufweist, welche, wie in Figur 1 dargestellt, derart angeordnet und ausgestaltet ist, dass diese als Auflage für den Abstreifer 3 dient.

Figur 4 zeigt ein bereits in Figur 2 dargestelltes Halteringsegment 2a im Detail. Das Halteringsegment 2a weist einen Innenradius R auf.

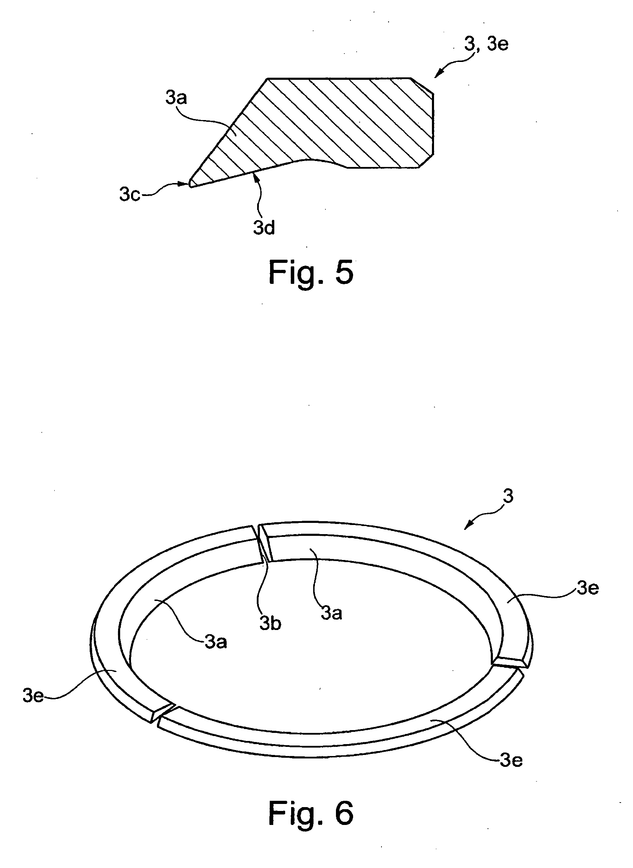

Figur 5 zeigt einen Schnitt durch das in Figur 1 dargestellte Abstreifringsegment 3e im Detail. Das Abstreifringsegment 3e umfasst eine Abstreiflamelle 3a, eine Auflagefläche 3d sowie eine Berührungsstelle 3c, welche zur Anlage an die Kolbenstange 6 bestimmt ist. Das Abstreifringsegment 3e besteht vorzugsweise aus Metall sodass die Berührungsstelle 3c vorzugsweise als scharfe Abreisskante ausgestaltet ist.

Figur 6 zeigt den bereits in Figur 1, 2 und 5 dargestellten Abstreifer 3 in perspektivischer Ansicht. Der erfindungsgemässe Ölabstreifring 1 weist den Vorteil auf, dass die Berührungsstelle 3c des Abstreifers 3 vorzugsweise keine oder eine nur geringe Kraft auf die Oberfläche 6a der Kolbenstange 6 bewirkt, da die durch die Feder 4 zum Zentrum 1a hin wirkenden Kräfte im Wesentlichen oder vollständig über die erste Stirnfläche 2d und die eventuell vorhandene zweite Stirnfläche 2e auf die Oberfläche 6a der Kolbenstange 6 übertragen werden. Der Abstreifer 3 kann somit derart ausgestaltet werden, dass dieser für eine möglichst hohe Abstreifwirkung optimiert ist. Insbesondere lässt sich der Querschnitt des Abstreifrings, beziehungsweise dessen Dimension in radialer und/oder axialer Richtung, auf ein Minimum reduzieren, woraus auch bei Verwendung eines Metalls eine gute Anpassung der einzelnen Segmente an die Kolbenstange 6 resultiert. Zur Aufrechterhaltung der Abstreifffunktion mit fortschreitendem Verschleiss besteht der Abstreifring aus mindestens zwei, vorzugsweise drei Segmenten 3e mit einem für den angestrebten Verschleiss dimensionierten Stoss 3b mit Spiel. Der Haltering 2 kann einteilig oder mehrteilig, vorzugsweise dreiteilig ausgestaltet sein und enthält ebenfalls einen Stoss 2g mit Spiel zur Verschleisskompensation. Zur Vermeidung von Ölleckagen durch die Stösse 2g,3b werden der Haltering 2 und der Abstreifer 3 derart angeordnet, dass sie sich gegenseitig die Stösse 2g,3b abdichten und somit in Verlaufsrichtung der Kolbenstange 6 keine durchgängigen Leckagepfade vorhanden sind. Dadurch wird auch bei fortschreitendem Verschleiss eine gute Abstreifwirkung sichergestellt.

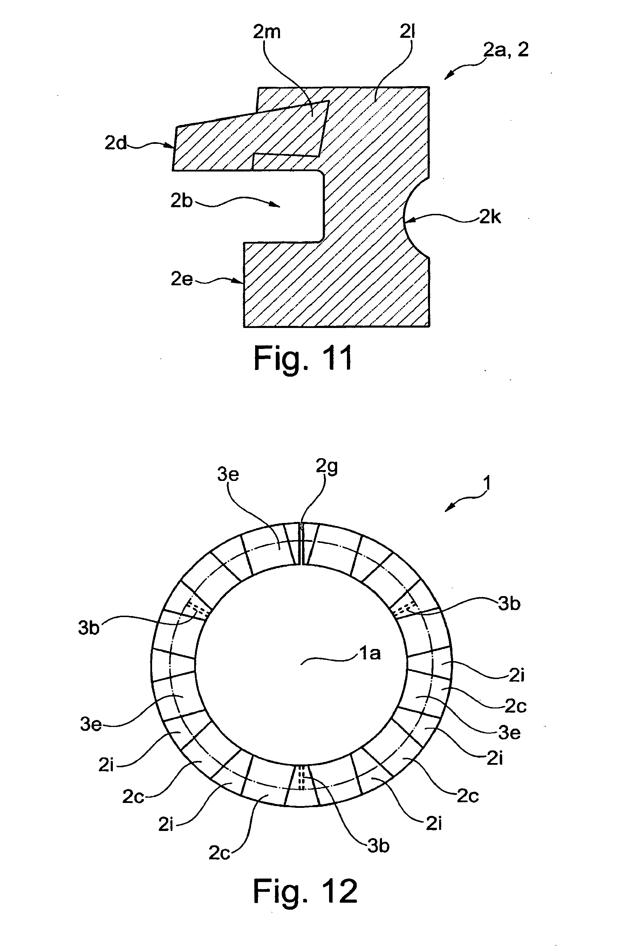

Figur 12 zeigt ein weiteres Ausführungsbeispiel eines Ölabstreifrings 1, der im Unterschied zu der in Figur 2 dargestellten Ausführungsform einen einstückigen Haltering 2 aufweist, mit einer einzigen Stossstelle 2g. Ansonsten ist der Ölabstreifring 1 wie in Figur 2 dargestellt ausgebildet und weist somit auch den in Figur 1 dargestellten Querschnitt auf.

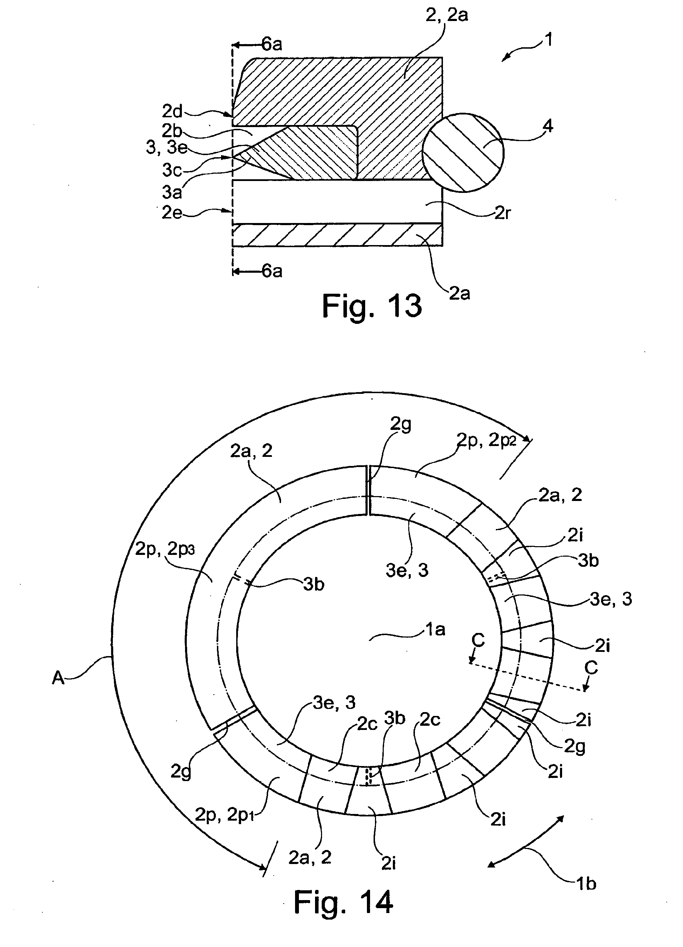

Figur 13 zeigt in einem Schnitt ein weiteres Ausführungsbeispiel eines Ölabstreifrings 1, der im Unterschied zu der in Figur 1 dargestellten Ausführungsform keine Abstützfläche 2h aufweist, da der Abstreifer 3 spitzenförmig zum Zentrum 1a hin verläuft, und an dessen Spitze die Berührungsstelle 3c ausbildet. Der Kanal 2c kann, wie in Figur 13 beispielhaft dargestellt, auch als gedeckter Kanal 2r ausgestaltet sein, sodass der gedeckte Kanal 2r eine Durchtrittsöffnung ausbildet.

Figur 11 zeigt in einem Schnitt ein weiteres Ausführungsbeispiel eines Halterings 2 beziehungsweise eines Halteringsegmentes 2a. Der Haltering 2 besteht aus zumindest einem ersten Ringteil 21 und einem zweiten Ringteil 2m, wobei das erste und zweite Ringteil 21,2m miteinander verbunden sind, vorzugsweise fest miteinander verbunden sind, wobei das zweite Ringteil 2m zwischen dem Zentrum 1a und dem ersten Ringteil 21 angeordnet ist, und wobei das zweite Ringteil 2m aus einem Kunststoff besteht, und wobei das zweite Ringteil 2m die Stirnfläche 2d ausbildet. Das erste Ringteil 21 kann aus einem Kunststoff oder auch aus Metall gebildet sein. Die zweite Stirnfläche 2e ist bezüglich der ersten Stirnfläche 2d zurückversetzt angeordnet, sodass nur die erste Stirnfläche 2d und die nicht dargestellte Berührungsfläche 3c des nicht dargestellten Abstreifers 3 an der Oberfläche 6a der Kolbenstange 6 anliegt.

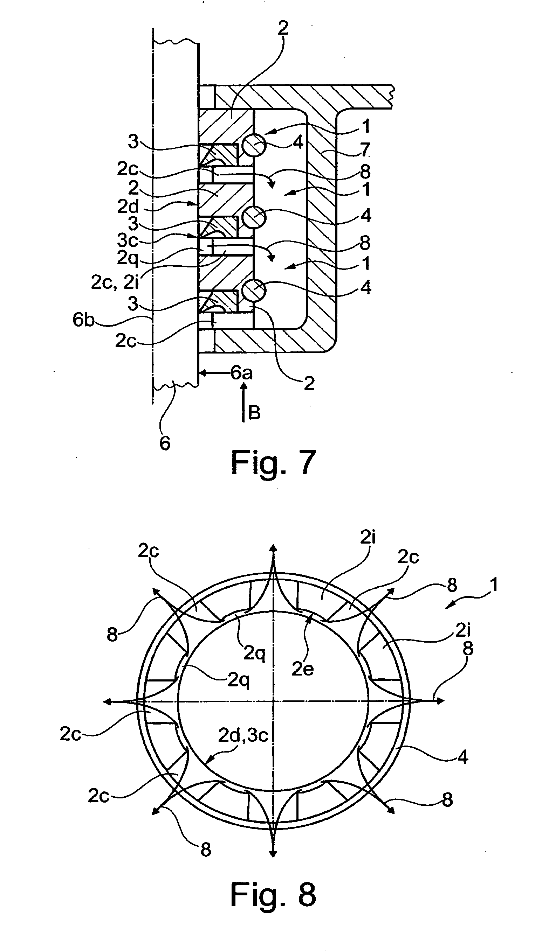

Figur 7 zeigt eine vertikal verlaufende Ölabstreifringpackung umfassend drei in Verlaufsrichtung der Kolbenstange 6 nacheinander folgend angeordnete Ölabstreifringe 1. Figur 8 zeigt eine Frontansicht aus Richtung B eines der in Figur 7 angeordneten Ölabstreifringe 1. Wie in Figur 8 dargestellt ist die zweite Stirnseite 2e, wie in Figur 1 strichliert dargestellt, zurückversetzt angeordnet, sodass sich zwischen de Kronenteil 2i und der Oberfläche 6a der Kolbenstange 6 ein Zwischenraum 2q ausbildet. Die erste Stirnseite 2d sowie die Berührungsfläche 3c des Abstreifers 3 liegen an der Oberfläche 6a der Kolbenstange 6 an, sodass Öl abgestreift wird, welches, wie mit dem Fluidstrom 8 dargestellt, über die Kanäle 2c radial nach Aussen entweicht. Figur 7 zeigt ebenfalls wie das Öl über den Fluidstrom 8 entweicht und innerhalb des Gehäuses 7 nach unten fliesst. Der in Figur 8 dargestellte Ölabstreifring 1 weist eine Mehrzahl von in Umfangsrichtung regelmässig beabstandet angeordnete Kronenteile 2i auf, wobei zwischen den Kronenteilen 2i regelmässig in Umfangsrichtung beabstandet angeordnete Kanäle 2c ausgebildet sind.

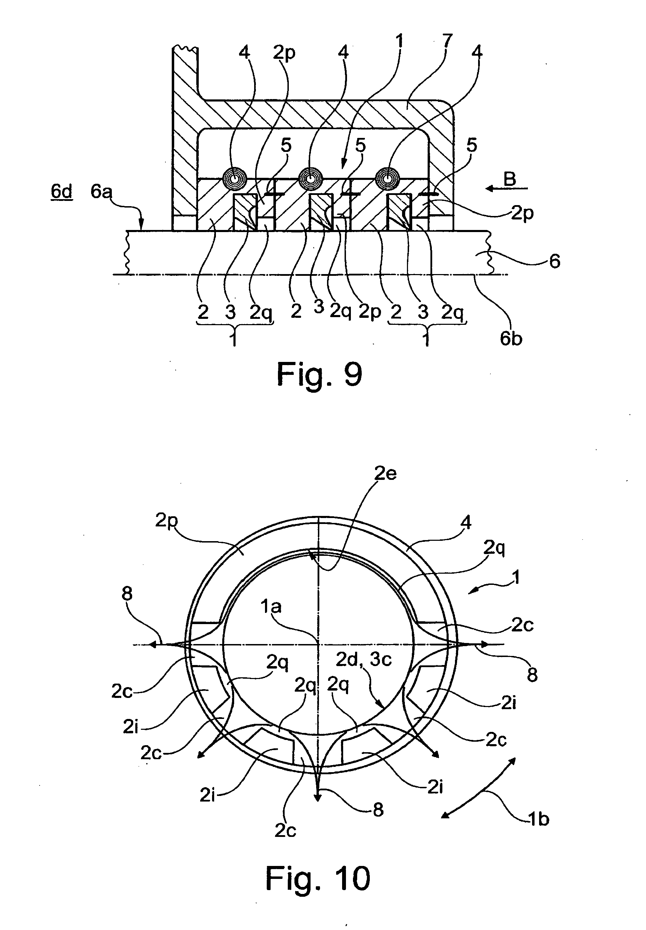

Figur 9 zeigt eine horizontal verlaufende Ölabstreifringpackung umfassend drei in Verlaufsrichtung der Kolbenstange 6 nacheinander folgend angeordnete Ölabstreifringe 1. Figur 10 zeigt eine Frontansicht aus Richtung B eines der in Figur 9 angeordneten Ölabstreifringe 1. Wie in Figur 10 dargestellt ist die zweite Stirnseite 2e, wie in Figur 1 strichliert dargestellt, zurückversetzt angeordnet, sodass sich zwischen de Kronenteil 2i und der Oberfläche 6a der Kolbenstange 6 ein Zwischenraum 2q ausbildet. Die erste Stirnseite 2d sowie die Berührungsfläche 3c des Abstreifers 3 liegen an der Oberfläche 6a der Kolbenstange 6 an, sodass Öl abgestreift wird, welches, wie mit dem Fluidstrom 8 dargestellt, über die Kanäle 2c radial nach Aussen entweicht. Die Kanäle 2c sind unten in Umfangsrichtung 1b mindestens entlang eines Winkelbereichs von 60 Grad angeordnet, wobei zwischen zwei Kanälen 2c je ein Kronenteil 2i angeordnet ist. Vorteilhafterweise weist jeder Kanal 2c in Umfangsrichtung 1b eine Breite entsprechend einem Winkelbereich von mindestens 10 Grad auf, sodass sich jeder Kanal 2c in Umfangsrichtung 1b über einen Winkelbereich von mindestens 10 Grad erstreckt. Oben ist zwischen dem links und rechts angeordneten Kanal 2c ein im Wesentlichen halbkreisförmiges, durchgehendes Kronenteil 2p angeordnet, welches sich über einen Winkelbereich von mindestens 60 Grad erstreckt, wobei dieses halbkreisförmige Kronenteil 2p in Umfangsrichtung derart durchgehend ausgestaltet ist, dass das Kronenteil 2p keinen Durchlass aufweist. Diese Ausgestaltung weist den Vorteil auf, dass das abgestreifte Öl, wie mit dem Fluidstrom 8 dargestellt, nur nach unten entweichen kann, da der Ölabstreifring 1 gegen oben keinen durchgehenden Kanal 2c in radialer Richtung aufweist. In einer besonders vorteilhaften Ausgestaltung weisen benachbart angeordnete Ölabstreifringe 1 wie in Figur 9 dargestellt eine Verdrehsicherung auf, beispielsweise einen Fixierstift 5, um ein gegenseitiges Verdrehen der Ölabstreifring 1 zu verhindern und um vorzugsweise auch ein Verdrehen der Ölabstreifringe 1 gegenüber dem Gehäuse 7 zu verhindern.

Der erfindungsgemässe Ölabstreifring 1 weist wie in Figur 9 und 7 dargestellt den Vorteil auf, dass die durch die Zwischenräume 2q ausgebildeten Drainagekanäle dem Abstreifer 3 aus Richtung B nicht nach- sondern vorgeschaltet sind, so dass sich zu einem Verdichtungskolben 6d hin eine plane in Umfangsrichtung durchgehende Fläche ausbildet. Diese Fläche wirkt als Dichtfläche und verhindert so das Austreten von Schmieröl in Verlaufsrichtung der Kolbenstange 6 aus dem jeweiligen Ölabstreifring 1. Darüber hinaus sind, wie in Figur 9 dargestellt, für den Einsatz in horizontaler Anordnung vorteilhafterweise keine Drainagekanäle in der Schwerkraft entgegen gesetzter Richtung angeordnet. Das abgestreifte Öl wird somit wie in Figur 10 dargestellt nur seitlich und nach unten abgeführt. Auf diese Art wird ein Umströmen der einzelnen Abstreifer 3 beziehungsweise der einzelnen Ölabstreifringe 1 verhindert. Vorteilhafterweise stellen zudem Fixierstifte 5 sicher, dass die Abstreifer 3 in der richtigen Position mit den abgedichteten Kanälen nach oben eingebaut werden.

Figur 14 zeigt eine Draufsicht auf ein weiteres Ausführungsbeispiel eines Ölabstreifrings 1. Im Unterschied zu dem in Figur 2 dargestellten Ölabstreifring 1 weist der in Figur 14 dargestellte Ölabstreifring 1 ein sich in Umfangsrichtung 1b über einen Winkelbereich A erstreckendes, durchgehendes Kronenteil 2p auf. Der Winkelbereich A kann sich über einen Winkelbereich zwischen 60 Grad und 350 Grad erstrecken. Im dargestellten Ausführungsbeispiel setzt sich das gesamte Kronenteil 2p aus drei Kronenteilsegmenten 2p1, 2p2, 2p3 zusammen. Das gesamte Kronenteil 2p könnte jedoch auch, unter anderem auch abhängig von der Grösse des Winkelbereichs A, nur ein einziges Kronenteilsegment 2p3 oder nur zwei Kronenteilsegmente 2p1, 2p2, 2p3 umfassen.

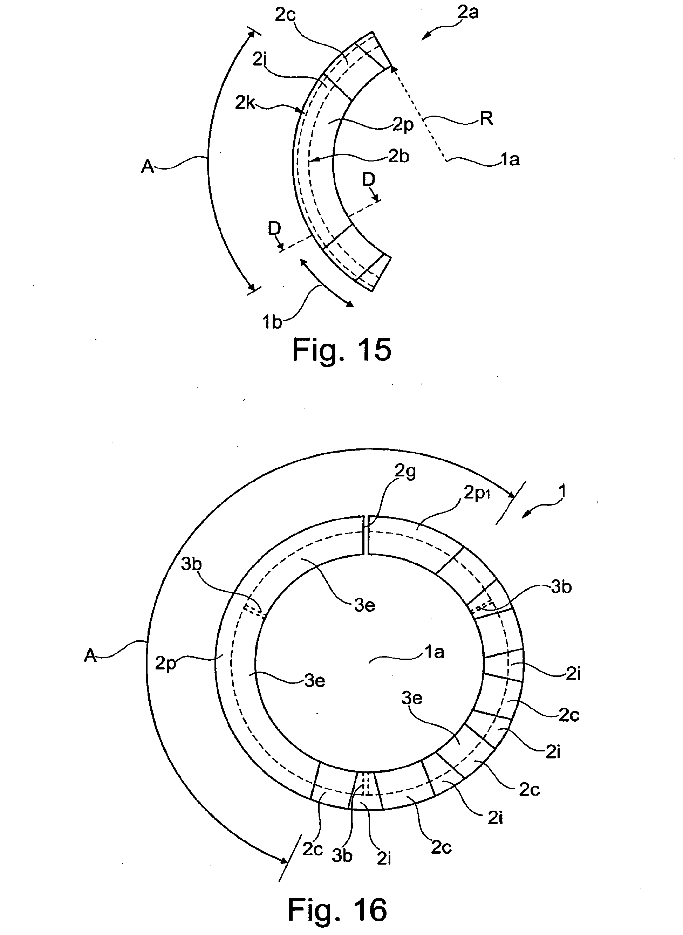

Figur 15 zeigt eine Draufsicht auf ein weiteres Ausführungsbeispiel eines Halteringsegmentes 2a. Im Unterschied zu dem in Figur 4 dargestellten Halteringsegment 2a weist der in Figur 15 dargestellte Halteringsegment 2a ein Kronenteil 2i auf, das als ein durchgehendes Kronenteil 2p ausgestaltet ist, und sich in Umfangsrichtung 1b über einen Winkelbereich A von etwa 60 Grad erstreckt. Ein Ölabstreifring 1 könnte beispielsweise zwei wie in Figur 4 dargestellte Halteringsegmente 2a sowie ein wie in Figur 15 dargestelltes Halteringsegment 2a umfassen, sodass der Ölabstreifring 1 ein durchgehendes Kronenteil 2p umfassen würde, welches sich über einen Winkelbereich A von etwa 60 Grad erstreckt. Der Winkelbereich A kann sich, bei einem Halteringsegment 2a, das sich über einen Winkelbereich von 120 Grad erstreckt, im Bereich zwischen 0 und 120 Grad liegen.

Figur 16 zeigt eine Draufsicht auf ein weiteres Ausführungsbeispiel eines einstückigen Ölabstreifrings 1. Im Unterschied zu dem in Figur 12 dargestellten Ölabstreifring 1 weist der in Figur 16 dargestellte Ölabstreifring 1 ein durchgehendes Kronenteil 2p auf, das sich über einen Winkelbereich A erstreckt, welcher sich über einen Winkel zwischen 60 Grad und 350 Grad erstrecken kann. Im dargestellten Ausführungsbeispiel verläuft die radial verlaufende Stossstelle 2g durch das Kronenteil 2p. Die Stossstelle 2g könnte jedoch auch derart angeordnet sein, dass diese nicht im Winkelbereich A angeordnet ist und daher nicht durch das Kronenteil 2p verläuft.

## Patentansprüche

1. Ölabstreifring (1) umfassend einen Haltering (2) sowie umfassend einen Abstreifer (3) mit einer Abstreiferlamelle (3a), wobei der Abstreifer (3) derart im Haltering (2) angeordnet ist, dass die Abstreiferlamelle (3a) gegen das Zentrum (1a) des Ölabstreifrings (1) hin ausgerichtet ist, um Öl an einer Kolbenstange (6) abzustreifen, wobei der Abstreifer (3) aus einer Mehrzahl von Abstreifersegmenten (3e) besteht welche in Umfangsrichtung (1b) des Ölabstreifrings (1) nacheinander folgend angeordnet sind, der Haltering (2) eine Nut (2b) zur formschlüssigen Aufnahme der Abstreifersegmente (3e) aufweist, und der Haltering (2) eine Stossstelle (2g) aufweist, **dadurch gekennzeichnet, dass** der Haltering (2) zumindest eine zum Zentrum (1a) des Ölabstreifrings (1) hin ausgerichtete erste Stirnfläche (2d, 2e) aus Kunststoff ausbildet, dass der Abstreifer (3) aus einem Material mit grösserer Härte als den die erste Stirnfläche (2d,2e) ausbildenden Kunststoff besteht, wobei die Abstreiflamelle (3a) des Abstreifers (3) ein zum Zentrum (1a) hin ausgerichteten Berührungsstelle (3c) aufweist, und dass der Abstreifer (3) und der Haltering (2) derart gegenseitig angepasst ausgestaltet sind, dass sowohl die zumindest erste Stirnfläche (2d, 2e) als auch die Berührungsstelle (3c) an der Kolbenstange (6) anliegen können.

2. Ölabstreifring gemäss Anspruch 1, **dadurch gekennzeichnet, dass** der Haltering (2) aus einer Mehrzahl von Halteringsegmenten (2a) besteht, welche in Umfangsrichtung
(1b) nacheinander folgend angeordnet und durch eine Stossstelle (2g) getrennt sind.

3. Ölabstreifring (1) nach einem der vorhergehenden Ansprüchen, **dadurch gekennzeichnet, dass** der Haltering (2) zwei Stirnflächen (2d, 2e) aufweist, die erste Stirnfläche (2d) und eine zweite Stirnfläche (2e), welche durch die in Umfangsrichtung verlaufende Nut (2b) gegenseitig getrennt sind.

4. Ölabstreifring (1) nach Anspruch 3, **dadurch gekennzeichnet, dass** die erste und die zweite Stirnfläche (2d, 2e) gleich weit zum Zentrum (1a) des Ölabstreifrings (1) hin vorstehen.

5. Ölabstreifring (1) nach Anspruch 3, **dadurch gekennzeichnet, dass** die erste Stirnfläche (2d) weiter zum Zentrum (1a) hin vorsteht als die zweite Stirnfläche (2e), sodass sich zwischen der zweiten Stirnfläche (2e) und der Oberfläche (6a) der Kolbenstange (6) ein Zwischenraum (2q) ausbildet.

6. Ölabstreifring (1) nach einem der vorhergehenden Ansprüchen, **dadurch gekennzeichnet, dass** der Abstreifer (3) aus drei Abstreifsegmenten (3e) besteht, wobei zwischen in Umfangsrichtung (1b) benachbart angeordneten Abstreifsegmenten (3e) eine radial verlaufende Stossstelle (3b) ausgebildet ist.

7. Ölabstreifring (1) nach einem der vorhergehenden Ansprüche, **dadurch gekennzeichnet, dass** der Haltering (2) zumindest einen radial zum Zentrum (1a) hin verlaufenden Kanal (2c) aufweist, und vorzugsweise eine Mehrzahl von in Umfangrichtung (1b) verteilt angeordneten, radial zum Zentrum (1a) hin verlaufenden Kanälen (2c) aufweist.

8. Ölabstreifring (1) nach Anspruch 7, **dadurch gekennzeichnet, dass** in Umfangsrichtung (1b) anschliessend an den zumindest einen Kanal (2c) ein sich in Umfangsrichtung (1b) erstreckendes, durchgehendes Kronenteil (2p) angeordnet ist, welches sich über einen Winkelbereich zwischen 60 Grad und 350 Grad erstreckt, wobei das durchgehende Kronenteil (2p) in Umfangsrichtung derart ausgestaltet ist, dass das durchgehende Kronenteil (2p) in radialer Richtung keinen Durchlass aufweist.

9. Ölabstreifring (1) nach Anspruch 7, **dadurch gekennzeichnet, dass** die Kanäle (2c) sich in Umfangsrichtung (1b) über einem Winkelbereich von mindestens 10 Grad erstrecken, und dass zwischen zwei Kanälen (2c) ein Kronenteil (2i) angeordnet ist, welches sich über einen Winkelbereich von mindestens 60 Grad erstreckt, wobei das Kronenteil (2i) in Umfangsrichtung derart durchgehend ausgestaltet ist, dass das Kronenteil (2i) keinen Durchlass aufweist.

10. Ölabstreifring (1) nach einem der vorhergehenden Ansprüche, **dadurch gekennzeichnet, dass** die Nut (2b) des Halterings (2) sich zum Zentrum (1a) hin erweitert, derart, dass der Haltering (2) im Bereicht der Nut (2b) eine quer zur Kolbenstange (6) verlaufende Abstützfläche (2h) aufweist.

11. Ölabstreifring (1) nach einem der vorhergehenden Ansprüche, **dadurch gekennzeichnet, dass** der Haltering (2) aus zumindest einem ersten Ringteil (21) und einem zweiten Ringteil (2m) besteht, dass das erste und zweite Ringteil (21,2m) miteinander verbunden sind, dass das zweite Ringteil (2m) zwischen dem Zentrum (1a) und dem ersten Ringteil (21) angeordnet ist, dass das zweite Ringteil (2m) aus einem Kunststoff besteht, und dass das zweite Ringteil (2m) die Stirnfläche (2d) ausbildet.

12. Ölabstreifring (1) nach Anspruch 11, **dadurch gekennzeichnet, dass** das erste Ringteil (21) aus Metall besteht.

13. Ölabstreifringpackung umfassend zumindest zwei Ölabstreifringe (1) nach einem der vorhergehenden Ansprüche.

14. Ölabstreifringpackung nach Anspruch 13, **dadurch gekennzeichnet, dass** zwei in Verlaufsrichtung (6b) der Kolbenstange (6) nebeneinander liegend angeordnete Ölabstreifringe (1) eine gegenseitige Verdrehsicherung (5) aufweisen.

15. Ölabstreifringpackung nach Anspruch 14, **dadurch gekennzeichnet, dass** die Verdrehsicherung (5) als ein Fixierstift ausgestaltet ist.

## Claims

1. An oil scraper ring (1) comprising a holding ring (2), as well as comprising a scraper (3) having a scraper lip (3a), wherein the scraper (3) is arranged in the holding ring (2) such that the scraper lip (3a) is oriented towards the center (1a) of the oil scraper ring (1) in order to scrape oil at a piston rod (6), wherein the scraper (3) is composed of a plurality of scraper segments (3e) which are arranged following one another in the circumferential direction (1b) of the oil scraper ring (1), wherein the holding ring (2) has a groove (2b) for the form-fitted reception of the scraper segments (3e), and wherein the holding ring (2) has an abutment position (2g), **characterized in that** the holding ring (2) has at least one first end face (2d, 2e) made of plastic oriented towards the center (1a) of the oil scraper ring (1), **in that** the scraper (3) is composed of a material having a larger hardness than the plastic forming the first end face (2d, 2e), wherein the scraper lip (3a) of the scraper (3) has a contact position (3c) oriented towards the center (1a), and **in that** the scraper (3) and the holding ring (2) are configured mutually adapted such that both the at least one end face (2d, 2e) and also the contact position (3c) can lie at the piston rod (6).

2. An oil scraper ring in accordance with claim 1, **characterized in that** the holding ring (2) is composed of a plurality of holding ring segments (2a) which are arranged following one another in the circumferential direction (1b) and which are separated by an abutment position (2g).

3. An oil scraper ring (1) in accordance with any one of the preceding claims, **characterized in that** the holding ring (2) has two end faces (2d, 2e), the first end face (2d) and a second end face (2e) which are mutually separated by a groove (2b) running in the circumferential direction.

4. An oil scraper ring (1) in accordance with claim 3, **characterized in that** the first and the second end face (2d, 2e) project the same distance towards the center (1a) of the oil scraper ring (1).

5. An oil scraper ring (1) in accordance with claim 3, **characterized in that** the first end face (2d) projects further towards the center (1a) than the second end face (2e) such that an intermediate space (2q) is formed between the second end face (2e) and the surface (6a) of the piston rod (6).

6. An oil scraper ring (1) in accordance with any one of the preceding claims, **characterized in that** the scraper (3) is composed of three scraper segments (3e), wherein a radially running abutment position (3b) is formed between scraper segments (3e) arranged adjacent one another in the circumferential direction (1b).

7. An oil scraper ring (1) in accordance with any one of the preceding claims, **characterized in that** the holding ring (2) has at least one passage (2c) running radially with respect to the center (1a) and preferably has a plurality of passages (2c) running radially with respect to the center (1a) arranged distributed in the circumferential direction (1b).

8. An oil scraper ring (1) in accordance with claim 7, **characterized in that** a continuous crown part (2p) extending in the circumferential direction (1b) is arranged adjoining at the at least one passage (2c) in the circumferential direction (1b) which crown part extends over an angular range between 60 degree and 350 degree, wherein the continuous crown part (2p) is configured in the circumferential direction such that the continuous crown part (2p) has no outlet in the radial direction.

9. An oil scraper ring (1) in accordance with claim 7, **characterized in that** the passages (2c) extend in the circumferential direction (1b) over an angular range of at least 10 degree, and **in that** a crown part (2i) is arranged between two passages (2c), which crown part extends over an angular range of at least 60 degree, with the crown part (2i) being configured continuous in the circumferential direction such that the crown part (2i) has no opening.

10. An oil scraper ring (1) in accordance with any one of the preceding claims, **characterized in that** the groove (2b) of the holding ring (2c) expands towards the center (1a) such that the holding ring (2) has a support surface (2h) in the region of the groove (2b) running transverse to the piston rod (6).

11. An oil scraper ring (1) in accordance with any one of the preceding claims, **characterized in that** the holding ring (2) is composed of at least a first ring part (21) and a second ring part (2m), **in that** the first and the second ring part (21, 2m) are connected to one another, **in that** the second ring part (2m) is arranged between the center (1a) and the first ring part (21), **in that** the second ring part (2m) is composed of a plastic, and **in that** the second ring part (2m) forms the end face (2d).

12. An oil scraper ring (1) in accordance with claim 11, **characterized in that** the first ring part (21) is composed of metal.

13. An oil scraper ring package comprising at least two oil scraper rings (1) in accordance with any one of the preceding claims,

14. An oil scraper ring package in accordance with claim 13, **characterized in that** two oil scraper rings (1) arranged lying next to one another in the direction of extent (6b) of the piston rod (6) have a mutual security against rotation (5).

15. An oil scraper ring package in accordance with claim 14, **characterized in that** the security against rotation (5) is configured as a fixation pin.

## Revendications

1. Segment racleur d'huile (1), comprenant une bague de maintien (2) et un racleur (3) doté d'une lamelle de racleur (3a), sachant que le racleur (3) est disposé dans la bague de maintien (2) de telle sorte que la lamelle de racleur (3a) est orientée en direction du centre (1a) du segment racleur d'huile (1), afin de racler l'huile se trouvant sur une tige de piston (6), sachant que le racleur (3) est constitué d'une pluralité d'éléments racleurs (3e) qui sont disposés en se succédant dans la direction circonférentielle (1b) du segment racleur d'huile (1), que la bague de maintien (2) présente une rainure (2b) pour recevoir les éléments racleurs (3e) par complémentarité de forme et que la bague de maintien (2) présente une zone de joint (2g), **caractérisé en ce que** la bague de maintien (2) forme au moins une première face frontale (2d, 2e) en matière plastique dirigée vers le centre (1a) du segment racleur d'huile (1), **en ce que** le racleur (3) est constitué d'un matériau de dureté supérieure à celle de la matière plastique formant la première face frontale (2d, 2e), sachant que la lamelle racleuse (3a) du racleur (3) présente une zone de contact (3c) dirigée vers le centre (1a), et **en ce que** le racleur (3) et la bague de maintien (2) sont configurés d'une manière mutuellement adaptée de telle sorte que tant l'au moins première face frontale (2d, 2e) que la zone de contact (3c) peuvent venir en appui contre la tige de piston (6).

2. Segment racleur d'huile selon la revendication 1, **caractérisé en ce que** la bague de maintien (2) est constituée d'une pluralité d'éléments de bague de maintien (2a) qui sont disposés en se succédant dans la direction circonférentielle (1b) et qui sont séparés par une zone de joint (2g).

3. Segment racleur d'huile (1) selon l'une des revendications précédentes, **caractérisé en ce que** la bague de maintien (2) présente deux faces frontales (2d, 2e), la première face frontale (2d) et une deuxième face frontale (2e), qui sont mutuellement séparées par la rainure (2b) s'étendant en direction circonférentielle.

4. Segment racleur d'huile (1) selon la revendication 3, **caractérisé en ce que** la première face frontale (2d) et la deuxième face frontale (2e) font saillie d'une même distance en direction du centre (1a) du segment racleur d'huile (1).

5. Segment racleur d'huile (1) selon la revendication 3, **caractérisé en ce que** la première face frontale (2d) dépasse plus en direction du centre (1a) que la deuxième face frontale (2e), de sorte qu'un espace intermédiaire (2q) se forme entre la deuxième face frontale (2e) et la surface (6a) de la tige de piston (6).

6. Segment racleur d'huile (1) selon l'une des revendications précédentes, **caractérisé en ce que** le racleur (3) est constitué de trois éléments racleurs (3e), sachant qu'une zone de joint (3b) s'étendant radialement est formée entre des éléments racleurs (3e) disposés en voisinage en direction circonférentielle (1b).

7. Segment racleur d'huile (1) selon l'une des revendications précédentes, **caractérisé en ce que** la bague de maintien (2) présente au moins un canal (2c) s'étendant radialement en direction du centre (1a), et présente de préférence une pluralité de canaux (2c) s'étendant radialement en direction du centre (1a) et disposés en étant répartis en direction circonférentielle (1b).

8. Segment racleur d'huile (1) selon la revendication 7, **caractérisé en ce qu'**une partie de couronnement continue (2p), s'étendant en direction circonférentielle (1b), est disposée en se raccordant en direction circonférentielle (1b) au canal au moins unique (2c) et s'étend sur une plage angulaire comprise entre 60 degrés et 350 degrés, sachant que la partie de couronnement continue (2p) est configurée de telle sorte que la partie de couronnement continue (2p) ne présente pas de passage en direction radiale.

9. Segment racleur d'huile (1) selon la revendication 7, **caractérisé en ce que** les canaux (2c) s'étendent en direction circonférentielle (1b) sur une plage angulaire d'au moins 10 degrés et **en ce qu'**une partie de couronnement (2i), qui s'étend sur une plage angulaire d'au moins 60 degrés, est disposée entre deux canaux (2c), sachant que la partie de couronnement (2i) est configurée continûment en direction circonférentielle de telle sorte que la partie de couronnement (2i) ne présente pas de passage.

10. Segment racleur d'huile (1) selon l'une des revendications précédentes, **caractérisé en ce que** la rainure (2b) de la bague de maintien (2) s'élargit en direction du centre (1a) de telle sorte que la bague de maintien (2) présente dans la région de la rainure (2b) une surface de soutien (2h) s'étendant transversalement à la tige de piston (6).

11. Segment racleur d'huile (1) selon l'une des revendications précédentes, **caractérisé en ce que** la bague de maintien (2) est constituée d'au moins une première partie de bague (21) et une deuxième partie de bague (2m), **en ce que** la première partie de bague (21) et la deuxième partie de bague (2m) sont reliées entre elles, **en ce que** la deuxième partie de bague (2m) est disposée entre le centre (1a) et la première partie de bague (21), **en ce que** la deuxième partie de bague (2m) est réalisée en une matière plastique et **en ce que** la deuxième partie de bague (2m) forme la face frontale (2d).

12. Segment racleur d'huile (1) selon la revendication 11, **caractérisé en ce que** la première partie de bague (21) est réalisée en métal.

13. Ensemble segment racleur d'huile comprenant au moins deux segments racleurs d'huile (1) selon l'une des revendications précédentes.

14. Ensemble segment racleur d'huile selon la revendication 13, **caractérisé en ce que** deux segments racleurs d'huile (1) disposés juxtaposés en position horizontale dans la direction de développement (6b) de la tige de piston (6) présentent un blocage mutuel en rotation (5).

15. Ensemble segment racleur d'huile selon la revendication 14, **caractérisé en ce que** le blocage en rotation (5) est réalisé sous la forme d'un axe de fixation en position.
